# EUROPÄISCHE PATENTANMELDUNG

(11) **EP 3 929 169 A2**
(43) Veröffentlichungstag der Anmeldung: **29.12.2021**
(21) Anmeldenummer: 21181912.3
(22) Anmeldetag: 25.06.2021
(51) Int. Cl.: C04B 28/00, E01F 8/00, E01F 8/02

(54) **LEHMELEMENTE FÜR LÄRMSCHUTZWÄNDE UND FÜR DEN HOCHBAU**

(30) Priorität: 25.06.2020 AT AT
(71) Anmelder: Reeh, Ute, 40225 Düsseldorf (DE); Lehm Ton Erde Baukunst GmbH, 6824 Schlins (AT)
(72) Erfinder: Reeh, Ute, 40225 Düsseldorf (DE); Rauch, Martin, 6824 Schlins (AT)
(74) Vertreter: Bogensberger, Burkhard

(57) **Zusammenfassung**

Die Erfindung betrifft eine Lärmschutzwand (100) mit Wandelementen (5) aus mineralischem Stampflehm oder maschinell verdichtetem, faserarmiertem Wellerlehm, wobei die Wandelemente (5) spezielle Nisthilfen (6) für Insekten, Vögel und/oder Fledermäuse in oder zwischen den Wandelementen (5) der Lärmschutzwand (100) aufweisen. Die Erfindung bezieht sich weiters auf ein Verfahren zur Herstellung maschinell verdichteter, faserarmierter Wellerlehmelemente mit für den Hochbau geeigneten Druckfestigkeiten, sowie auf damit hergestellte Lehmelemente.

## Beschreibung

### TECHNISCHES GEBIET

Die vorliegende Erfindung betrifft Lehmelemente aus Stampflehm oder verdichtetem Wellerlehm, die sich sowohl zur Errichtung von Lärmschutzwänden, als auch für den Einsatz im Hochbau eignen, Verfahren zur Herstellung solcher Lehmelemente inklusiver spezieller Ausführungsformen als Brut- und Lebensraum für Insekten, Vögel und Fledermäuse, sowie Verfahren zur Errichtung von Lehm-Schwerlastwänden aus Stampf- und verdichtetem Wellerlehm.

### STAND DER TECHNIK

Lärmschutzwände dienen als Schallschirme zur Lärmminderung, d.h. zur Reduktion des Schalldruckpegels. Erreichbar sind dabei Schalldruckreduktionen von bis zu 20 dB(A), wobei bereits eine Reduktion von 10 dB(A) vom menschlichen Gehör als Halbierung des Lärmpegels wahrgenommen wird. Die gute Wirksamkeit einer Lärmschutzwand hängt aber von einer Reihe von unterschiedlichen Faktoren ab. So hat etwa die Höhe der Lärmschutzwand Einfluss, aber gleichzeitig auch ihr Abstand von der Lärmquelle, dem so genannten Emissionsort. Ein Nachteil solcher üblicherweise hohen Lärmschutzwände ist jedenfalls, dass sie zumeist Sichtsperren darstellen, die das Stadt- oder Landschaftsbild beeinträchtigen.

Wichtig sind auch die akustischen Eigenschaften der Lärmschutzwand selbst. Hierbei spielt die Materialwahl der Lärmschutzwand bzw. ihrer Wandelemente, sofern sie aus solchen zusammengesetzt ist, eine entscheidende Rolle. Häufig sind solche Wandelemente aus Blechen, z.B. gelochtem Aluminium, gefertigt, die zwischen Strahlträger gesetzt werden, oder sie bestehen aus Glas, Kunststoff oder Beton, z.B. Reliefbeton. Die Herstellung solcher Materialien ist meist energieaufwändig und Ressourcen verbrauchend. Harte, den Schall reflektierende Materialoberflächen sind im Sinne des Schallschutzes ungünstig,

Ein großer Nachteil gängiger Lärmschutzwände ist insbesondere deren schlechte ökologische Gesamtbilanz, auch als "ökologischer Fußabdruck" bezeichnet. Besonders dann, wenn die benötigten Materialien durch Bergbau zu Tage gefördert, an einem anderen, weit entfernten Ort industriell hergestellt, zur Baustelle transportiert und danach an der Baustelle verbaut werden.

Dazu kommt bei herkömmlichen Lärmschutzwänden, dass bei ihrem Rückbau Materialien wie Metall, Glas oder Kunststoffe energieaufwändig entsorgt oder gegebenenfalls in speziellen Anlagen recycelt werden müssen. Sowohl für Entsorgung als auch Recycling fallen erneut Transportwege an.

Überdies stellen konventionelle Lärmschutzwände für Flora und Fauna häufig hinderliche Sperren und einen Verlust von Lebensraum dar.

Aufgeschüttete Lärmschutz-Wälle schneiden im Hinblick auf die ökologischen Kriterien zwar deutlich besser ab, bringen aber die Nachteile mit sich, dass sie viel Grundfläche benötigen bzw. verbrauchen und - bei gleicher Höhe wie eine Lärmschutzwand - den Schall nicht so effektiv abschirmen.

Ein Ziel der vorliegenden Erfindung ist es daher, eine neue Art der Lärmschutzwand aus Lehmelementen bereit zu stellen, welche einen guten Schallschutz bietet und die Nachteile bekannter Lärmschutzwände wenn möglich komplett oder zumindest weitgehend eliminiert.

Ein weiteres Ziel der vorliegenden Erfindung ist es, Lehmelemente auf der Basis von verdichtetem Wellerlehm bereit zu stellen, die sich nicht nur für die Errichtung von Lärmschutzwänden eignen, sondern auch für die Verwendung im Hochbau tauglich sind.

### KURZE BESCHREIBUNG DER ERFINDUNG

Herkömmliche Lehmelemente zur Errichtung von Lehmwänden im Hochbau, insbesondere im privaten Wohnbau, bestehen zumeist aus rein anorganischem Stampflehm, der in erster Linie aus natürlichen Lehm-, Ton-, und Mergelgemischen besteht. Stampflehmelemente werden im Werk oder direkt vor Ort fabriziert, zumeist unter Beigabe von ca. 60% Schotter zur Lehmmasse. Bei der Herstellung vor Ort wird die fertig angemischte Masse in eine Schalung gewünschter Dimensionen gestampft.

Dem gegenüber stehen Lehmelemente aus so genanntem Wellerlehm, die Lehm, Sand und Schluff als natürliche Inhaltsstoffe und zusätzlich Stroh oder gleichwertiges pflanzliches Fasermaterial als Zuschlagsstoff in erheblichen Anteilen enthalten. Wobei das beigemengte pflanzliche Fasermaterial, insbesondere Stroh nicht nur der Feuchtigkeitsaufnahme dient, sondern gleichzeitig eine Armierungsfunktion übernimmt, indem es Zugspannungen im Material ableitet. Eine weitere wichtige Funktion der Pflanzenfasern ist der Erosionsschutz. Derartiger Wellerlehm mit Strohanteil ist leichter als herkömmlicher, rein anorganisch-mineralischer Stampflehm.

Wellerlehm wird traditionellerweise nicht schalungsgebunden verarbeitet, sondern beispielsweise von Hand oder mit der Gabel zu Schichten von jeweils 50 bis 80 cm Höhe bis zum Erreichen der gewünschten Bauwerkshöhe, z.B. einer Lehmwand, aufgesetzt. Um eine ebene Wandoberfläche zu erhalten, wird jede Lage nach etwa 1-3 Wochen Trocknungszeit glatt "abgestochen" und die nächste Lage darauf gesetzt. Diese Art der Verarbeitung von Wellerlehm wird in der Fachwelt als "Lehmwellerbauweise" bezeichnet. Wellerlehm wird heute vor allem noch zur Sanierung bestehender Lehmgebäude verwendet.

Die randständig befindlichen, abgeschnittenen, bzw. im Laufe der Zeit durch Verwitterung an der Oberfläche vorliegenden Fasern, z.B. Strohhalme, wirken dabei als Erosionsbremsen. Es gibt tausende über hundert und zweihundert Jahre alte, unverputzte Scheunen aus Wellerlehm, deren dem Wetter ausgesetzten Wände und Giebelseiten nur minimal abgewittert sind. Beobachtungsgemäß beträgt eine solche kalkulierte Erosion ca. 3 cm pro 100 Jahre. Besonders verbreitet war diese Bauweise in Sachsen, Thüringen, Sachsen-Anhalt, Großbritannien (Devon, Cornwall, Wales) und Nordwest-Frankreich, aber auch in Afrika, Asien, dem südlichen Nordamerika und in Mexiko.

Von Nachteil beim schichtweisen Aufbau eines Lehmelements nach dem üblichen Wellerlehm-Verfahren ist die relativ hohe Feuchte des formbaren, von Hand aufgesetzten Wellerlehms, die aus statischen Gründen benötigten, hohen Wandstärken von meist 60 bis 120 cm, die damit verbundenen sehr langen Trocknungszeiten mehreren Wochen oder Monaten, bis eine nächste Lage gesetzt werden kann, sowie eben der hohe Anteil an Handarbeit. Undenkbar für heutige Infrastrukturbauwerke und den modernen Wohnbau.

Wohl nicht zuletzt aus diesem Grunde wurde in der Fachwelt das Thema "Wellerlehm" bislang im Wesentlichen mit unwirtschaftlicher Handarbeit assoziiert und mit Verarbeitungsmethoden, die zwar in zahlreichen historischen massiven Bauwerken Mitteleuropas ihre Daseinsberechtigung gefunden haben mögen, aber im modernen Wohnbau von heute keinen Platz hätten. Daher wurden die Verarbeitung von Wellerlehm und die "LehmwellerBauweise" offenbar nicht weiterentwickelt, obwohl man aus den zahlreichen Lehmbauten der Vergangenheit weiß, wie dauerhaft das Material an sich wäre.

Es ist den Erfindern der gegenständlichen Patentanmeldung zu verdanken, dass sie angesichts weiterhin ansteigender CO₂-Emissionen die Möglichkeit erkannten, der Bauwirtschaft eine zukunftsträchtige Lösung für den Hochbau anzubieten, die der extrem energieaufwändigen Ziegelproduktion eine weitaus energieärmere Alternative in Form von nicht-gebrannten Wellerlehmelementen zur Verfügung stellt. Wobei die erfindungsgemässen Wellerlehmelemente nicht nur bei ihrer Herstellung passiv Energie und damit CO₂-Ausstoß einsparen, sondern obendrein noch aktiv durch den Anteil an Pflanzenfasern, insbesondere Stroh, eine aktive Reduktion von CO₂ aus der Luft durch dauerhaftes Binden in den Lehmelementen bewirken.

Möglich wurde dies durch die Erkenntnis, dass durch maschinelles Verdichten der mit Pflanzenfasern armierten Wellerlehmmasse Druckfestigkeiten erreicht werden, die Lehmwände auch als tragende Elemente in Infrastrukturbauwerken sowie im Hochbau in für den modernen Stampflehmbau bereits eingeführten und üblichen Wandstärken einsetzbar machen.

Als weiterer Pluspunkt ist dabei zu nennen, dass auf diese Art und Weise mit einfachen, überall verfügbaren Materialien (z.B. auch in Regionen, in denen der regionale Lehm nicht wie in Alpennähe mit Schotter vermischt vorkommt) eine höhere Festigkeit als bisher bekannt erreicht werden kann.

Erfindungsgemäß können durch Pressen verdichtete Lehmblöcke aus z.B. mit Stroh faserarmiertem Wellerlehm zu einer Mauer oder Wand aufgeschichtet werden. Alternativ kann eine fertig gemischte Wellerlehmmasse auch im Schalungsverfahren, insbesondere mittels Gleitschalungen bei sehr langen Wänden wie z.B. Lärmschutzwänden, vor Ort verarbeitet, d.h. in die Schalungen eingefüllt und in einem Hybridverfahren maschinell gestampft werden. Beide Verfahrensvarianten lassen auch eine Vorfertigung zu.
Mittels eines derartigen, erfindungsgemäsen Schalungsverfahrens kann beispielsweise eine Lärmschutzwand abschnittsweise über ihre gesamte Länge, Lage für Lage mit nur kurzen Zwischentrocknungsphasen aufgebaut werden.

Ein allfälliger Rückbau einer erfindungsgemäßen Lärmschutzwand, ob nun aus herkömmlichem Stampflehm oder verdichtetem Wellerlehm gefertigt, ist einfach und kostengünstig zu bewerkstelligen, weil keine Metalle, Glas oder Kunststoffe energieaufwändig recycelt werden müssen. Das Material der Lehmelemente kann zu 100% wiederverwendet werden bzw. kann direkt vor Ort als Erdreich verbleiben. Lediglich eine allfällige Abdeckung und das Fundament müssen auf herkömmliche Weise rückgebaut und entsorgt oder recycelt werden.

Wann immer möglich, werden der Lehm und die restlichen Materialien der Lehmmischungen vor Ort bezogen, oft können diese dem Aushub von Fahrbahn- oder Streckenausbau oder von Baugruben im Hochbaubereich entnommen werden.

### DETAILLIERTE BESCHREIBUNG DER ERFINDUNG

Die Eignung des Lehms zum Verarbeiten bezeichnet man als Mindestbindigkeit. Bei Wellerlehm ist eine Mindestbindigkeit bereits bei 50-60 g/cm² gegeben, gemessen mit der im Stand der Technik bekannten, so genannten "Achterlingsprobe" Dabei wird eine Lehmprobe unter Zugabe von Wasser zu einer Kugel mit 5 cm Durchmesser geformt und diese aus 2 m Höhe fallen gelassen. Um als Lehmmaterial für die erfindungsgemässe Verwendung tauglich zu sein, muss der Durchmesser der Aufprallfläche ebenfalls 5 cm betragen. Ist dies der Fall, wird die Probe in die Achterlingsform (= eine Gussform in Form einer 8) gestampft, dann die Form gelöst und der entstandene Lehmkörper ("Achterling") an eine Apparatur zur Bestimmung der Zugfestigkeit gehängt. In die untere Öffnung des Achterlings wird ein Beutel eingehängt und dieser solange mit Wasser oder Sand befüllt, bis die Achterling-Lehmprobe reißt. Aus der eingesetzten Wasser- oder Sandmenge und dem Eigengewicht der Messapparatur lässt sich die Zugfestigkeit und damit die Beständigkeit bzw. Bindigkeit der Lehmprobe ermitteln und man kann anhand einer im Stand der Technik bekannten Tabelle (siehe z.B. nachfolgende Tabelle 1) bestimmen, wie "fett" oder "mager" ein Lehm ist.

**Tabelle 1: Einteilung von Baulehm nach seiner Bindekraft im Achterlingstest gemäss DVL, 2008**

| Masse beim Bruch, bezogen auf die gesamte Bruchfläche [5cm²] | Masse beim Bruch je cm2 | Bruchspannung | Bezeichnung |
|---|---|---|---|
| [g] | [g/cm²] | [N/mm², MPa] | |
| bis 250 | bis 50 | bis 0.005 | im Allgemeinen nicht geeignet |
| ≥ 250 bis 400 | ≥ 50 bis 80 | ≥ 0.005 bis 0.008 | sehr mager |
| > 400 bis 550 | > 80 bis 110 | > 0.008 bis 0.011 | mager |
| > 550 bis 1000 | > 110 bis 200 | > 0.011 bis 0.020 | fast fett |
| > 1000 bis 1400 | > 200 bis 280 | > 0.020 bis 0.028 | fett |
| > 1400 bis 1800 | > 280 bis 360 | > 0.028 bis 0.036 | sehr fett |
| > 1800 | > 360 | > 0.036 | Ton |

Die Wellerlehmbauten der Vergangenheit wurden immer mit dem regional vorkommenden Lehm erreichtet. Zum Teil wurden sehr magere Lehme zu Wellermasse verarbeitet.

Da das Mischungsverhältnis der Grundmaterialien Lehm und Pflanzenfasern, in der Regel Stroh, als volumenbasierte Menge angegeben werden kann und Lehm meistens eine Restfeuchte bzw. einen Wasseranteil von ca. 8-20% besitzt, wird das Mischungsverhältnis der nachfolgend offenbarten erfindungsgemässen Rezepturen stets in Bezug auf das Trockengewicht angegeben, sofern nicht explizit anders erwähnt.

Wellerlehm:
Erfindungsgemäss einsetzbarer Wellerlehm mit einer Dichte von typischerweise mehr als 1200 kg/m³ enthält im Trockengewicht vorzugsweise 1 - 5 Gew.% an Pflanzenfasern, in der Regel Stroh, kann für spezielle Anwendungen aber 10% und mehr, gegebenenfalls sogar bis zu 50%, an Pflanzenfasern enthalten.

Der Lehm ist sinnvollerweise Bodenaushub am Ort des zu errichtenden Bauwerks oder wird zumindest in der jeweils näheren Umgebung eines Projekts gewonnen. Lehm ist in Europa vielerorts im Boden vorhanden. Die Wellermasse wird aus Lehm, Stroh, gegebenenfalls zusätzlichem Wasser sowie bei Bedarf weiteren Zuschlagstoffen gemischt. Traditionell händisch verarbeiteter Wellerlehm hat eine etwas höhere Feuchte von 15 bis 22%, während für den erfindungsgemäss mechanisch verdichteten Wellerlehm ein geringerer Wasseranteil von ca. 8 - 15 Gew.% bevorzugt und entsprechend eingestellt wird. Fertig gemischter Lehm sollte vor der Verarbeitung 12 - 48 h feucht gelagert bleiben um zu "mauken". Dadurch vergrößert sich erfahrungsgemäß die Bindekraft des Lehms, was dadurch erklärt wird, daß sich die enthaltenen Tonminerale während dieser Phase aufgrund elektrostatischer Anziehungskräfte umlagern und dichtere Packungen bilden können. Das Stroh nimmt Wasser auf und wird biegsam und geschmeidig.

Leichtlehm:
Leichtlehm mit einer Dichte von typischerweise 300-1200 kg/m³ enthält im Trockengewicht 10 - 70 Gew.% an Pflanzenfasern, in der Regel Stroh, je nach gewünschter Anwendung.

Dabei wird das verwendete Stroh mit Lehmschlicker versetzt. Der Wasseranteil der fertigen Masse beträgt rund 15-30 Gew.%. Da Leichtlehm einen sehr hohen Strohanteil hat, muss der Lehm eine "Mindestfette" haben, im Bedarfsfall ist daher sehr fetter Lehm oder Ton zuzugeben. Die Mindestbindigkeit für Leichtlehm liegt nach Niemeyer bei mindestens 160 g/cm².

Für die Herstellung von erfindungsgemässen Lehmelementen aus Wellerlehm durch Pressen von Blöcken in Formen oder durch Stampfen in Wand-Schalungen gilt ganz allgemein, dass
- je geringer die Feuchtigkeit der Lehmmasse ist, desto höher die Presskraft sein muss;
- je höher die Bindigkeit der Lehmmasse ist, desto mehr Feuchtigkeit darf sie enthalten; und
- je magerer der eingesetzte Lehm ist, desto höher muss der Pressdruck sein.

Da der Strohanteil relativ viel Feuchtigkeit bindet, ist beim Wellerlehm vorzugsweise ein Feuchtegehalt von 8 bis 15%, insbesondere von 8 bis 12%, bezogen auf die Trockenmasse, für das erfindungsgemässe Verarbeitungsverfahren geeignet.

Zum Vergleich: bei herkömmlichem Stampflehm, der nur aus anorganischem Material besteht, beträgt die Feuchte üblicherweise nur 6 bis 8 %.

Anhand der nachfolgenden Beispiele wird die Erfindung zum besseren Verständnis weiter erläutert.

### BEISPIEL 1: Herstellung eines Lehmblocks aus verdichtetem Wellerlehm

Geeigneten Lehm findet man in Mitteleuropa fast überall, typischerweise unterhalb der Humusschicht, bei sehr sandigen Böden unterhalb der Sandschicht, häufig ab einer Tiefe von ca. 50 cm. Für das Verfahren wird natürliches lehmhaltiges Bodenmaterial aus dem Untergrund eingesetzt, das bei Bauvorhaben als Überschussmasse anfällt oder vor Ort aus Seitenentnahmen gewonnen werden kann. Die für das Verfahren verwendbare natürliche Zusammensetzung des Lehms kann ein breites Spektrum an Korngrößen umfassen.

100 kg lehmhaltiger Erdaushub werden in einem geeigneten Mischer mit 2 kg Stroh einer Schnittlänge von ca. 20-50 cm vermengt und innig vermischt. Es ist darauf zu achten, dass der Mischer die Strohhalme nicht zerreisst oder zerkleinert. Geeignete Mischer sind im Stand der Technik bekannt, beispielhaft seien nur 2-Wellen-Schneckenmischer genannt. Die Masse wird beim Mischen, gegebenenfalls durch Wasserzugabe, je nach Bindigkeit des verwendeten Lehms auf einen Feuchtegehalt von 8-15%, bezogen auf die Trockenmasse der Lehmmischung eingestellt. Den fertig gemischten Wellerlehm lässt man 1-2 Tage ruhen ("mauken"). Die Lehmmasse lässt sich in diesem Zustand Wochen oder auch Jahre lang aufbewahren. Die Qualität des Materials wird durch die Lagerung, das erwähnte Mauken, nur verbessert. Anschliessend kann man die Wellerlehm-Mischung in eine Presskammer oder eine Schalung einfüllen und mit einem Pressdruck von 1.4 - 3.0 N/mm² oder einem entsprechenden Stampfdruck verdichten.

Zur erfindungsgemässen Erzeugung guter Druckfestigkeiten von mehr als 1.5 N/mm², vorzugsweise von mehr als 2 N/mm², bei gleichbleibendem Verhältnis von pflanzlichem Fasermaterial zu Lehm (typischer Faseranteil 1 bis 5 Gew.%, bezogen auf die Trockenmasse der Lehmmischung) sind folgende Zusammenhänge zu beachten:
- als pflanzliches Fasermaterial sind alle Arten von pflanzlichem Getreidestroh, aber auch Reisstroh, Piniennadeln (z.B. in Mexiko und Afrika) oder anderes, vor Ort verfügbares, organisches Fasermaterial von im Schnitt 15 bis 50 cm Länge, vorzugsweise von durchschnittlich 20 - 40 cm und insbesondere von 25 - 35 cm Länge geeignet.
- bei Lehmen mit geringer Bindigkeit (= magerer Lehm), insbesondere im Bereich von 40 - 120 g/cm², ist vor dem Verdichten der fertig gemischten Lehmmasse ein eher geringer Wassergehalt von 8-12 % einzustellen und dafür beim Verdichten ein höherer Pressdruck in einem Bereich von vorzugsweise 1.5 bis 3 N/mm² anzuwenden.
- bei Lehmen mit höherer Bindigkeit in einem Bereich oberhalb von 120 g/cm², insbesondere in einem Bereich zwischen 120 und 220 g/cm², kann vor dem Verdichten der fertig gemischten Lehmmasse ein etwas höherer Wassergehalt von typischerweise 12 - 16% eingestellt werden und obendrein kann mit einem reduzierten Pressdruck in einem Bereich von vorzugsweise 1.3 - 2 N/mm², verdichtet werden.
- bei höheren Strohgehalten von über 5 % im Trockengewicht, beispielsweise von 6 - 50%, ist gegebenenfalls die Bindigkeit des Lehms durch Zumischen von fettem Lehm, den es in Deutschland auch in getrockneter Form abgefüllt in Säcken gibt, entsprechend zu erhöhen, und/oder - insbesondere wenn der Lehm vor Ort sehr mager sein sollte - durch die Zugabe von geeignetem Lehm- oder Tonmehl. Bei sehr hohem Strohanteil sollte ausschließlich fetter Lehm verwendet werden (vorzugsweise Bindigkeit über 200 bzw. 220 g/m²).

Um die gewünschten Wasser- oder Feuchtigkeitsgehalte in den fertig gemischten Wellerlehmmassen zu erhalten, kann man diese beispielsweise in den Sommermonaten lufttrocknen lassen, was diesen ohnehin schon ökologisch vorteilhaften Werkstoff noch weiter positiv beeinflusst.

Mit dieser erfindungsgemässen Methodik der Herstellung von Lehmelementen aus Wellerlehm lassen sich Druckfestigkeiten von deutlich mehr als 1 N/mm², insbesondere von 3 - 5 N/mm² erzielen. Das entspricht den Werten für zeitgemäßen Stampflehm im Hochbau. Bislang wurde selbst im aktuellen Wellerlehmbau nur von maximal erreichbaren Festigkeiten im Bereich von 1N/mm² ausgegangen (siehe z.B. Tabelle 2). Diese geringe Druckfestigkeit konnte bislang nur durch hohe Wanddicken ausgeglichen werden, was ihn für den modernen Hochbau nur sehr begrenzt einsetzbar machte.

**Tabelle 2: aus "Lehmbau Regeln; Begriffe - Baustoffe - Bauteile"; Hrsg: Dachverband Lehm e.V.; ISBN 978-3-8348-0189-0; 3. überarbeitete Auflage 2009; Springer Vieweg Verlag; Tabelle 5.2, S.92**

| Druckfestigkeit von Lehmbaustoffen - Erfahrungswerte | | |
|---|---|---|
| Baustoff | Rohdicht [kg/m³] | Druckfestigkeit [N/mm²] |
| Stampflehm mit mineralischem Zuschlag | 2000 - 2200 | 3 -5 |
| Stampflehm mit Faserzuschlag | 1700 - 2000 | 2-3 |
| Wellerlehm | 1400 - 1700 | 1 |

### BEISPIEL 2: Herstellung von Prüflingen aus Wellerlehm und Leichtlehm

Der Wassergehalt der Wellerlehmmasse betrug in verschiedenen Herstellungsdurchgängen 11-16% und jener der Leichtlehmmasse 51-53%.

Nach dem Befüllen der Druckkammer mit rechteckigem Querschnitt erfolgte das Pressen der Leichtlehm- oder Wellerlehmmassen mittels einer hydraulischen Presse. Gepresst wurde in nur einem einzigen Pressgang, d.h. nicht in mehreren Durchgängen hintereinander, wie dies bei der Schichtenbauweise im Stampfverfahren meist der Fall ist.

In diesem Pilotversuch hatte die Druckkammer einen Querschnitt von 48.0 x 28 cm. Die Hydraulik übte eine Kraft von ca. 19 t auf den Stempel der Presse aus, entsprechend einem Druck von 1.39 N/mm² auf die Lehmmasse.

Nach dem Pressvorgang wurde an der dem Stempel gegenüberliegenden Seite der Verschluss der Druckkammer geöffnet und der gepresste Lehmblock vom hydraulisch angetriebenen Stempel hinaus geschoben. Ein solcherart hergestellter Lehmblock kann entweder direkt auf eine zu errichtende Wand platziert oder auf einer Unterlage zur weiteren Trocknung zwischengelagert werden.

In den Versuchen hat sich gezeigt, dass man - je nach Ausgangsmaterial - mit einem Pressdruck von vorzugsweise mindestens 1.4 - 2 N/mm² arbeiten sollte, will man Druckfestigkeiten in den fertigen Lehmblöcken erreichen, die die Anforderungen der entsprechenden Baunormen des Hochbaus erfüllen. Um gleichbleibende Qualität und insbesondere auch die innere Gleichmäßigkeit der Lehmelemente zu gewährleisten, hat es sich zudem als vorteilhaft herausgestellt, sogar mit noch höheren Press- oder Stampfdrücken von vorzugsweise 1.5 bis 3.0 N/mm² zu arbeiten.

Die Pressdauer scheint dabei ohne Belang zu sein.

Nach dem Pressvorgang und der Durchtrocknung der Lehmblöcke ist im Prinzip keine weitere Bearbeitung mehr erforderlich. Sowohl die gepressten Blöcke aus Wellerlehm als auch jene aus Leichtlehm können gegebenenfalls gesägt und gebohrt werden. Frisch gepresste Blöcke können, gegebenenfalls nach vorherigem Befeuchten ihrer Kontaktflächen, direkt versetzt werden, durchgetrocknete Lehmelemente hingegen sollten mit Lehmmörtel aufeinander gesetzt werden. Frisch gepresste Blöcke mit den Abmessungen 70 x 48 x 28 cm (Länge-Höhe-Dicke), die in den Vorversuchen nach vorherigem Anfeuchten der Kontaktflächen direkt aufeinander gesetzt wurden, erwiesen sich als absolut formstabil und fest miteinander verbunden. Erreicht wurde dies vor allem durch die erfindungsgemässe Kombination aus geringer Feuchte, die für die Formstabilität verantwortlich ist, und hohem Pressdruck bei der Herstellung der Lehmblöcke, der für die nötige Druckfestigkeit sorgt. Erfindungsgemäß können jedoch auch Blöcke anderer Dimensionen, beispielsweise von 140 x 100 x 60 cm hergestellt werden.

Alternativ kann man den Wellerlehm auch in Schalungen stampfen, wobei in den Vorversuchen bereits Wandhöhen von 2m in einem einzigen Arbeitsvorgang, also ohne Zwischentrocknungen, erfolgreich realisiert werden konnten. Mit geeigneten Schalungen lassen sich auf diese Art und Weise auch höhere Lehmwände herstellen und mit entsprechenden Gleitschalungen auch beliebig lange Lehmwände. Bei Wandhöhen von über 3 Meter muss allerdings die untere Lage trocken sein, bevor die nächste aufgesetzt wird. Natürlich lässt sich auch für solch hohe Wände analog zum Stampflehm mit vorfabrizierten und aufgesetzten Elementen arbeiten.

Aus den bisherigen Versuchen ist auch zu erkennen, dass im Gegensatz zur bisherigen, klassischen Lehmwellerbauweise mit einer Verdichtung von in der Regel weit unter 1 N/mm², bei der erfindungsgemässen Verarbeitung von Wellerlehm die Druckfestigkeit wesentlich höher und damit die Wandstärken für erfindungsgemäss hergestellte Lehmwände mit tragender Funktion deutlich geringer ausfallen können.

Das Material der so hergestellten Lehmblöcke lässt sich ohne Abstriche wieder verwenden. Dazu muss es lediglich angefeuchtet und umgewälzt und/oder durchgeknetet werden. Überdies kann das Material auch ohne weitere Verarbeitungsschritte in der Natur entsorgt - dem Boden also quasi zurück gegeben - werden, da es keine synthetischen Zusätze enthält.

Druckfestigkeitsbestimmung:
Nach dem obigen Verfahren hergestellte Wellerlehm- und Leichtlehmproben wurden an der TH Lübeck auf Druckfestigkeit geprüft. Dabei zeigte sich, dass die Druckfestigkeit der mit einem Pressdruck von 1.39 N/mm² gepressten Wellerlehmblöcke ausreicht, um hoch zu bauen (die Höhe ergibt sich aus der Druckfestigkeit und den jeweils anzuwendenden Sicherheitsvorschriften). Die ermittelten Werte sind in den Tabelle 3 bis 5 dargestellt. Dabei betrug die Bindigkeit des Lehms aus dem Dorf Nebelin ca. 60 g/cm², die des Thüringer Recyclinglehms ca. 150 g/cm² und die des Nebeliner Strohlems (Stroh mit Lehmschlicker, dem Ton hinzugefügt wurde) über 160 g/m². Der Strohlehm war hier allerdings noch nicht optimiert.

Die in den folgenden Tabellen angegebenen Werte repräsentieren jeweils nur eine beispielhafte Messreihe von mehreren Messreihen, die in diesem Zusammenhang durchgeführt worden sind.

**Tabelle 3: Nebeliner Lehm (Wellerlehm)**

| | L | B | H | Gew. 1 | Gew. 2 | Gew. 3 | Volumen | Dichte trocken | Kraft | Druckfestigkeit |
|---|---|---|---|---|---|---|---|---|---|---|
| | mm | | | kg | | | mm³ | kg/m³ | kN | N/mm² |
| *Stempelseite* | 208 | 200 | 201 | 14.8 | 14.8 | 13.7 | 0.0083616 | 1642.03 | 129.0 | 3.23 |

**Tabelle 4: Recyclinglehm aus Thüringen aus dem Jahr 1711 (Wellerlehm)**

| L | B | H | Gew. 1 | Gew. 2 | Gew. 3 | Gew. 4 | Gew. 5 | Volumen | Dichte trocken | Kraft | Druckfestigkeit |
|---|---|---|---|---|---|---|---|---|---|---|---|
| mm | | | kg | | | | | mm³ | kg/m³ | kN | N/mm² |
| 202 | 201 | 200 | 14.78 | 14.38 | 14.26 | 14.22 | 14.21 | 0.0081204 | 1749.9 | 204 | 5.1 |

**Tabelle 5: erster Test mit Leichtlehm (Nebeliner Strohlehm)**

| L | B | H | Gew. 1 | Gew. 2 | Gew. 3 | Gew. 4 | Gew. 5 | Gew. 6 | Volumen | Dichte trocken | Druckfestigkeit |
|---|---|---|---|---|---|---|---|---|---|---|---|
| mm | | | kg | | | | | | mm³ | kg/m³ | N/mm² |
| 206 | 204 | 208 | 6.00 | 5.73 | 5.57 | 5.50 | 5.49 | 5.50 | 0.0087 | 629.22 | 0.43 |

Die solcherart hergestellten Lehmelemente aus gepresstem Wellerlehm können generell für die Errichtung senkrechter Strukturen, beispielsweise für Außenwände im Hochbau, als Lärmschutzwände, sowie für alle Arten von leichten und schweren Zwischenwänden, Vorsatzschalen, Innendämmungen, und Holzbalken-Deckenfüllungen verwendet werden.

### BEISPIEL 3: Lärmschutzwand

In einer speziellen Ausführungsform kann eine erfindungsgemäße, aus traditionellem Stampflehm oder erfindungsgemässen Wellerlehmelementen gefertigte Lärmschutzwand in einer Art und Weise ausgeführt werden, dass sie für Insekten, Vögel und/oder Fledermäuse besiedlungsfähig wird. Dies wird insbesondere dadurch erreicht, dass in die Wandelemente Nisthilfen integriert werden, die sinnvollerweise an der der Lärmquelle abgewandten Seite angeordnet sind. Nisthilfen für Hohlraum besiedelnde Wildbienen und andere Insekten sind in Form von Aussparungen, Bohrungen oder Löchern in dem Material der Lehmelemente vorhanden. Dabei können solche Hohlräume im fertig getrockneten Zustand eines Lehmelements, insbesondere eines Wellerlehmelements, mittels eines Bohrers nachträglich erzeugt werden, oder im fertigen aber noch feuchten Lehmelement, durch Stechen von Löchern.

Gemäss einer weiteren Ausgestaltungsvariante einer erfindungsgemäßen Lehmwand, insbesondere Lärmschutzwand, weist die Lehmwand bzw. weisen zumindest einzelne Elemente der Lehmwand Bereiche aus einem unarmiertem und weniger stark verdichteten Lehmmaterial auf, in den sich manche Insektenarten oder manche Vogelarten (die sonst in natürlichen Steilwänden brüten) die Löcher selbst graben können. Für die Anordnung oder, besser gesagt, Integrierung solcher Lehmelemente in eine Lehmwand, z.B. eine Lärmschutzwand, können beim Errichten der Lehmwand Aussparungen oder Nischen dadurch erzielt werden, dass bei Schalungsbauweise beispielsweise entsprechende Platzhalter, z.B. Quader aus Holz, eingearbeitet werden. Diese werden später wieder entfernt und die verbleibende Aussparung kann mit unarmiertem Lehm mit höherem Sand/Mergel/Schluffanteil gefüllt werden. Alternativ kann die Lärmschutzwand aber auch mit vorgefertigten Lehmelementen dergestalt errichtet werden, dass zwischen einzelnen Lehmelementen gewünschte Zwischenräume offen gelassen werden und mit unarmiertem und schwächer verdichtetem Lehm gefüllt werden. Dabei ist zu betonen, dass diese Elemente aus Naturlehm so in der Wand angeordnet sind, dass sie in Hinblick auf die Stabilität bzw. Statik der Wand keinerlei Einfluss haben.

In einer weiteren Ausgestaltungsvariante einer erfindungsgemäßen Lehmwand oder einzelner Lehmelemente können integrierte Nisthilfen in Form gelochter Elemente, vorzugsweise aus gebranntem Ton oder tonähnlichen Materialien eingebaut werden. Beispielsweise kommen dafür bei relativ niedriger Temperatur (unter 900 °C) gebrannte, gelochte Ziegelplatten und ähnliche Materialien in Betracht. Die vergleichsweise schwache Brennung unter 900 Grad ist wichtig, um die Härte der betreffenden Elemente gering zu halten, da die Insekten auf Diffusionsoffenheit angewiesen sind. Die gelochten Tonelemente sind vorzugsweise in Reihen angeordnet und erfüllen damit einerseits die erwünschte Funktion als Nisthilfen für Insekten, tragen darüber hinaus aber auch aufgrund ihrer Härte und Wasserunlöslichkeit als Erosionsbremsen zu einer verbesserten Witterungsbeständigkeit bei.

Eine ähnliche Funktion einer Erosionsbremse oder eines Abwitterungsschutzes - die auch eine zusätzliche Verbesserung des akustischen Absorptionsverhaltens bewirkt, kann an der der Lärmquelle zugewandten, "besiedlungsfeindlichen" Seite, gegebenenfalls zusätzlich zu anderen bereits vorhandenen Erosionsbremsen, auch durch mindestens eine, vorzugsweise annähernd waagerecht durch die Lärmschutzwand verlaufende, Hanfkalkmörtel-Schicht oder Heraklitschicht realisiert werden.

Als Nisthilfen sind natürlich auch in die Lehmelemente integrierte, vorzugsweise direkt unterhalb einer bevorzugt am oberen, freien Ende der Lehmwand angebrachten Wandabdeckung eingearbeitete, Schilfrohr- oder Bambusstängel, oder andere vergleichbare pflanzliche Strukturen verwendbar. Versuche haben gezeigt, dass solche Einbauelemente von Wildbienen rasch angenommen und umgehend besiedelt werden.

Weiterhin ist es optional, aber bevorzugt, das Fundament einer erfindungsgemäßen Lärmschutzwand als sogenanntes Streifenfundament auszugestalten, vorzugsweise aus Beton. Dieses mindestens 30 cm über Bodenniveau erhabene Fundament schützt die Lehmwand vor Spritzwasser und aufsteigender Bodenfeuchtigkeit. Im Falle einer Lärmschutzwand entlang von Verkehrswegen können auf der der Lärmquelle zugewandten Seite als weiterer Schutz gegen Spritzwasser Standardleitplanken aus Beton eingesetzt werden.

In einer typischen Ausgestaltungsvariante einer erfindungsgemäßen Lehmwand im outdoor-Bereich, insbesondere einer Lärmschutzwand, ist als Witterungsschutz an ihrem oberen, himmelwärts gerichteten Ende eine Abdeckung vorgesehen. In Betracht kommen beispielsweise Abdeckungen mit Wellen- oder Trapezprofil, beispielsweise aus einem Wellblech, aber auch funktionelle Abdeckungen wie Solarpanele, Photovoltaik-Platten, gegebenenfalls auch ein bepflanztes Gründach.

Je nach Anwendungszweck der hervorragend schalldämmenden Lehmelemente können den Grundbestandteilen Lehm, Schluff oder Mergel und Sand weitere Zuschlagsstoffe beigemengt werden. Im Falle der Verwendung von Wellerlehm enthalten die erfindungsgemässen Wellerlehm-Mischungen organische Fasermaterialien, vorzugsweise natürlichen Ursprungs, wie beispielsweise Getreidestroh, Heu, Heidekraut, Wolle, Flachs, Hanf, Piniennadeln, und dergleichen einer durchschnittlichen Länge von 15 - 50 cm, insbesondere von 20 - 40 cm und vorzugsweise von 25 - 35 cm durchschnittlicher Länge. Im Sinne der ökologischen Wertigkeit einer erfindungsgemäßen Lehmwand ist es entscheidend, dass nur natürliche organische oder mineralische Zusatzstoffe in der Lehmbaumasse enthalten sind. Dadurch lässt sich das Material nicht nur ohne weitere Trennungsmaßnahmen recyclen, sondern auch im Boden naturgerecht entsorgen.

In einer weiteren Ausgestaltungsvariante der erfindungsgemäßen Lärmschutzwand ist diese nicht fortlaufend geradlinig ausgerichtet, sondern weicht zumindest abschnittsweise - insbesondere an deren Enden - von einer schnurgeraden Linie ab. Sie kann beispielsweise so gestaltet sein, dass ihr Verlauf in Draufsicht zickzackförmig erscheint. Sie kann dabei in vorbestimmten Teilabschnitten in definierten Winkeln von der linearen Längsausrichtung bzw. -achse abweichen. Die Winkel und Abschnittslängen zwischen den Winkeln sind dabei vorzugsweise jeweils unterschiedlich zu gestalten, so dass sich (in Draufsicht) ein unregelmäßiges "Zickzack" bildet. Die Unregelmäßigkeit hat sowohl ästhetisch, als auch ökologisch-mikroklimatisch positive Auswirkungen. Auf diese Weise ergeben sich Wandabschnitte, die zwar etwas mehr Grundfläche und Raum verbrauchen, aber die folgenden positiven Effekte mit sich bringen:
- Die Statik der Lärmschutzwand wird verbessert.
- Die Wanddicke kann reduziert werden.
- Die auf die Lärmschutzwand auftreffenden Schallwellen werden besser gebrochen.

Es ist bekannt, dass eine plane Oberfläche den auftreffenden Schall gerichtet reflektiert und dabei gegebenenfalls sogar verstärkt, während nicht plane Oberflächen zu einer diffusen Schallstreuung und somit einer Reduzierung des Schallpegels führen können.. Auftreffende Windböen werden ebenfalls gebrochen bzw. abgelenkt und nicht an einer planen Fläche beschleunigt. Die der Lärmquelle abgewandte Lärmschutzwand-Seite erzeugt auf diese Weise mindestens teilweise ökologisch vorteilhafte Teilbereiche und Mikroklimata, zusätzlich zum allgemeinen atmosphärischen Schutz gegen Regen, Wind und Sonneneinstrahlung.

Ein erfindungsgemässes Verfahren zur Herstellung von Lehmwänden und/oder Lehmelementen aus Wellerlehm, die sowohl als Schallschutz bei besonders lärmbelasteten Verkehrswegen als auch für spezielle Anwendungen im Hochbau eingesetzt werden können, setzt das vorgängige Abmischen eines Wellerlehm-Lehmgemischs voraus. Dieser Vorgang umfasst das Vermengen von - vorzugsweise vor Ort gewonnenem - erdfeuchtem Lehm mit Stroh und gegebenenfalls weiteren Zuschlagstoffen wie z.B. Sand, das nachfolgende Einstellen einer gewünschten Bearbeitungs-Feuchte, insbesondere durch Zusatz von Wasser, inniges Vermischen der Komponenten zu einer weitgehend homogenen Masse, und Setzen Lassen der resultierenden Wellerlehm-Mischung über einen Zeitraum von vorzugsweise mindestens 12 bis 48 Stunden. Während dieser 12 - 48 h langen feuchten Lagerung kann der fertig gemischte Lehm "mauken". Damit bezeichnet man - wie oben bereits erwähnt - eine Reihe von spontan ablaufenden physikalisch-chemischen Vorgängen, die erfahrungsgemäß die Bindekraft des enthaltenen Lehms verstärken. Erklärt wird dies dadurch, daß sich die plättchenförmigen Tonminerale während dieser Phase aufgrund ihrer elektrostatischen Anziehungskräfte umlagern und dichtere Packungen bilden. Das Stroh wiederum nimmt Wasser auf und wird biegsam und geschmeidig.

Für die Errichtung einer Lärmschutzwand mit erfindungsgemäßen Wellerlehmelementen, werden entweder
a) Wellerlehmelemente als Blöcke durch Stampfen in Einzelschalungen oder Pressen in Presskammern mit vorbestimmten Mindestdrücken vorgefertigt und diese sofort oder nach ihrer Trocknung mittels Lehmmörtel zu einer Mauer bzw. Lehmwand aufgeschichtet bzw. "vermauert"; oder
b) es wird vor Ort eine Lärmschutzwand aus Wellerlehmelementen errichtet bzw. hochgezogen, indem Wellerlehm lagenweise bzw. schichtweise direkt auf ein vorgefertigtes Fundament vor Ort aufgeschichtet bzw. aufgebracht wird, wobei die jeweils nächste, obere Lage bzw. feuchte Schicht erst nach Trocknung der jeweils vorhergehenden, unteren Lage bzw. Schicht aufgebracht wird. Dabei werden typischerweise im noch feuchten Zustand die Oberflächen der Wellerlehmelemente abgestochen, abgeschnitten oder in einem beschleunigten Verfahren erfindungsgemäß abgesägt. Aufgrund der unerwünschten Zeitverzögerungen durch den Trocknungsprozess und der geringeren Festigkeit des Materials wegen fehlender Verdichtung ist diese zweite Variante aber nicht bevorzugt; oder
c) es wird vor Ort eine Lärmschutzwand aus Wellerlehmelementen errichtet bzw. hochgezogen, indem konditionierter, d.h. auf eine bestimmte gewünschte Restfeuchte von beispielsweise 8 - 12 Gew.%, bezogen auf die Trockenmasse der Lehmmischung, eingestellter Wellerlehm in eine Schalung, beispielsweise eine Gleitschalung, eingebracht und mit einem vorbestimmten Mindestdruck maschinell gestampft oder gepresst wird.

Mit den Verfahren a) und c) lassen sich Wellerlehmelemente herstellen, die entgegen den Erwartungen der Fachwelt überraschend hohe Druckfestigkeiten in einem Bereich aufweisen, welcher die in den einschlägigen Baunormen geforderten Druckfestigkeiten für Stampflehm im Hochbau erreichen. Dies gilt selbst für Bauelemente mit sehr hohem Strohanteil in der Lehmmasse, sofern in der Produktion vergleichsweise hoher Druck von ca. 3 N/mm² und darüber angewandt wird.

Anhand von Figuren wird die Erfindung symbolisch und beispielhaft näher erläutert. Die Figuren stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

### FIGURENBESCHREIBUNG

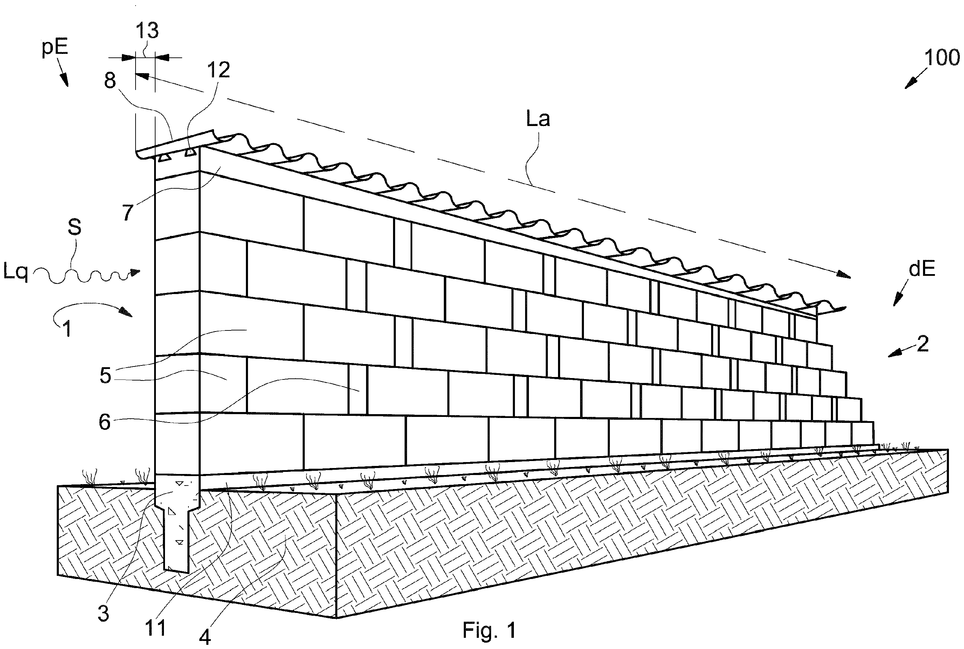

Es zeigen
- Fig. 1: eine schräg-seitliche perspektivische Gesamtansicht einer ersten Ausgestaltungsvariante einer Lärmschutzwand mit erfindungsgemäßen Lehmelementen, die beispielsweise im Wellerlehm-Verfahren hergestellt sind, und mit zwischen diesen Lehmelementen angeordneten Nisthilfen in Form von Lehmquadern aus einem weichen, gegebenenfalls nicht-armierten Lehm;

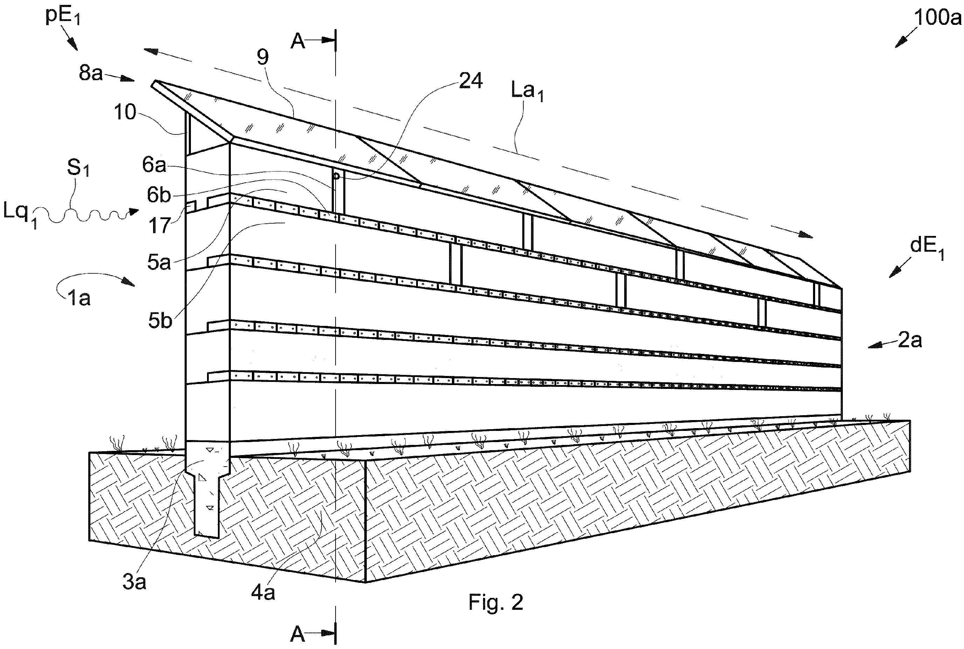

- Fig. 2: eine schräg-seitliche perspektivische Gesamtansicht einer zweiten, nicht bevorzugten Ausgestaltungsvariante einer Lärmschutzwand mit Lehmelementen in Form von Lehmlagen, die beispielsweise im Stampflehm-Verfahren hergestellt wurden, und mit zwischen diesen Lehmelementen angeordneten Nisthilfen in Form von gelochten Tonplatten, sowie mit in diesen Lehmelementen angeordneten Nisthilfen in Form der aus der Fig. 1 bereits bekannten Lehmquader;

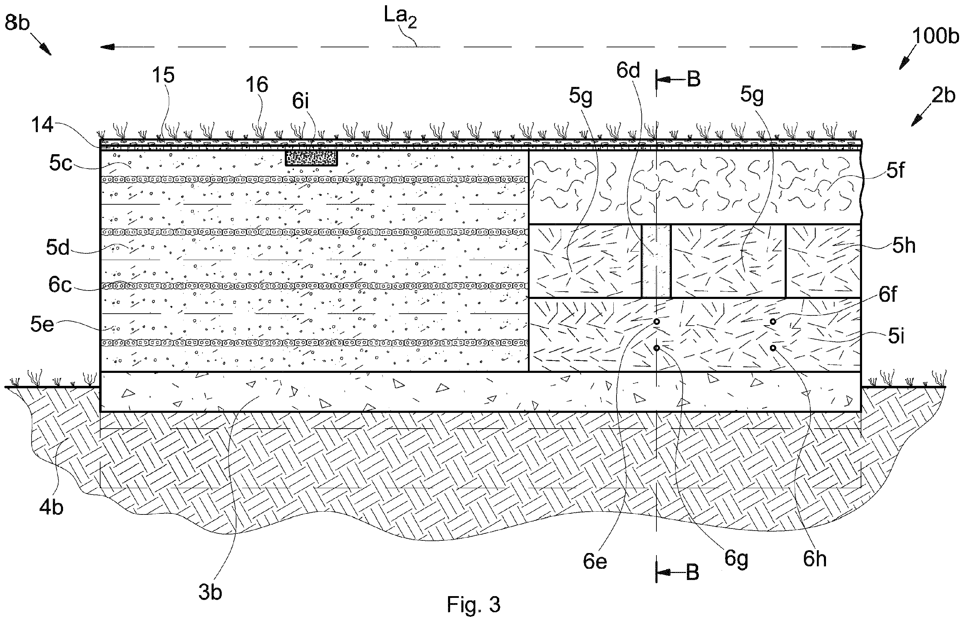

- Fig. 3: eine Seitenansicht einer dritten Ausgestaltungsvariante einer Lärmschutzwand, mit einem Mix aus beiden hierin offenbarten Lehmelement-Arten, wobei bei den Stampflehmelementen erneut gelochte Tonplatten in leicht abgeänderter Form integriert bzw. mit eingestampft sind und wobei in den Wellerlehmelementen beispielhaft Nisthilfen in Form von Löchern oder Bohrungen angeordnet sind;

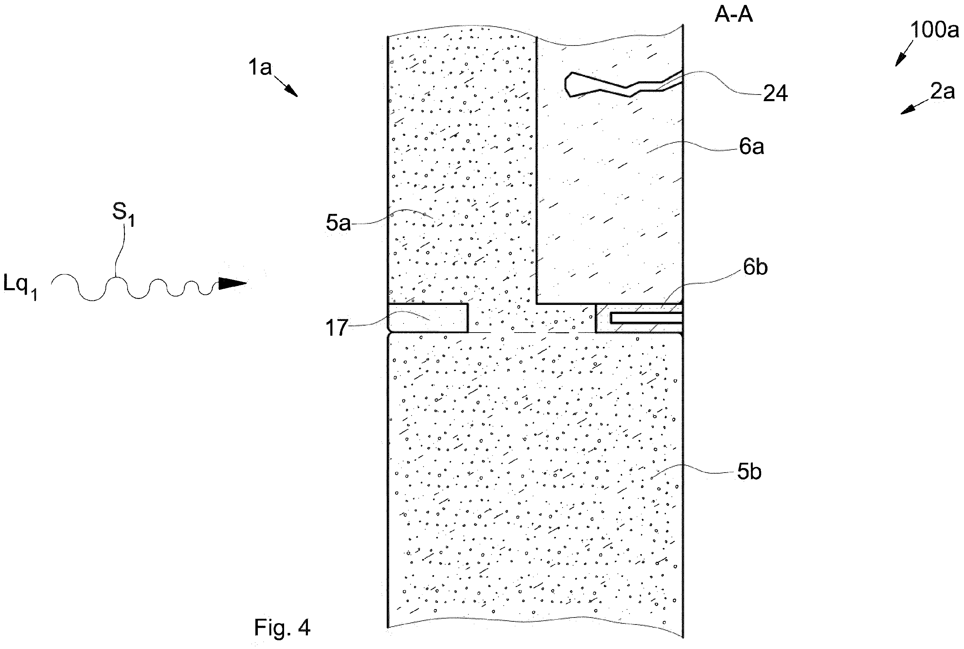

- Fig. 4: eine Schnittansicht entlang eines Schnittes A-A durch die erfindungsgemäße Lärmschutzwand aus Stampflehmelementen gemäß der zweiten Ausgestaltungsvariante aus der Fig. 2, sowie durch die Nisthilfe in Form eines Lehmquaders aus weichem, unbehandeltem Lehm und durch die Nisthilfe in Form einer gelochten Tonplatte;

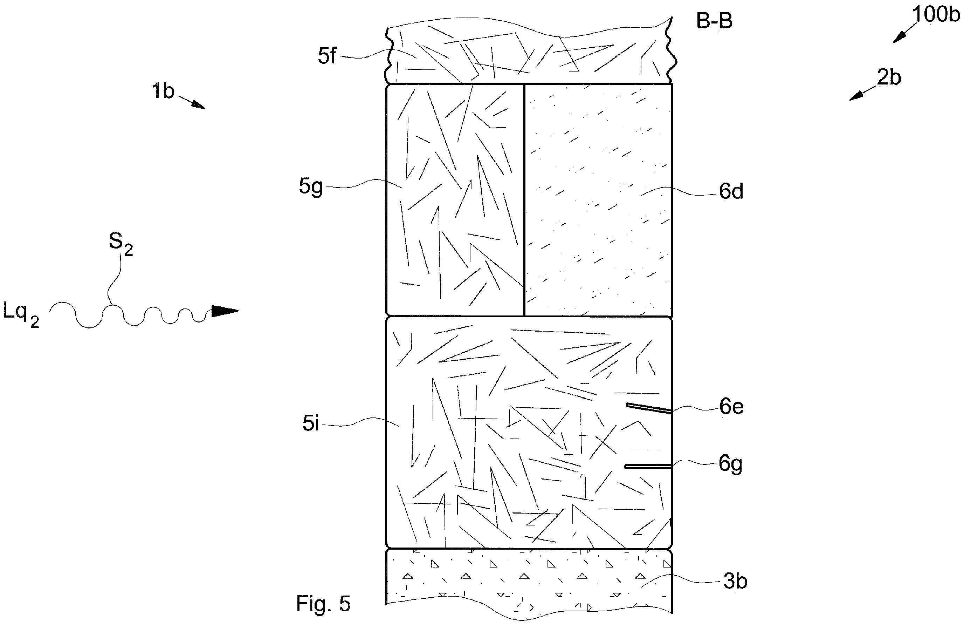

- Fig. 5: eine Schnittansicht entlang eines Schnittes B-B durch die erfindungsgemäße Lärmschutzwand gemäß der Ausgestaltungsvariante nach Fig. 3, genauer gesagt durch das lose aufgeschichtete obere Wellerlehmelement, durch die Nisthilfe in Form eines Lehmquaders und durch Löcher in einem unteren Wellerlehmelement;

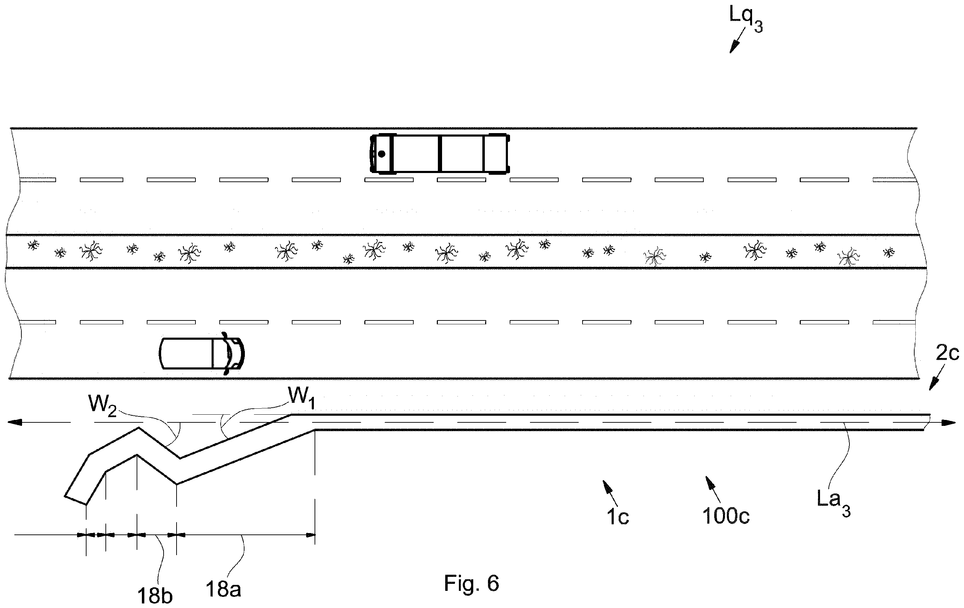

- Fig. 6: eine Draufsicht auf eine Ausgestaltungsvariante einer Lärmschutzwand mit mindestens einem Teilabschnitt in Zickzack-Form;

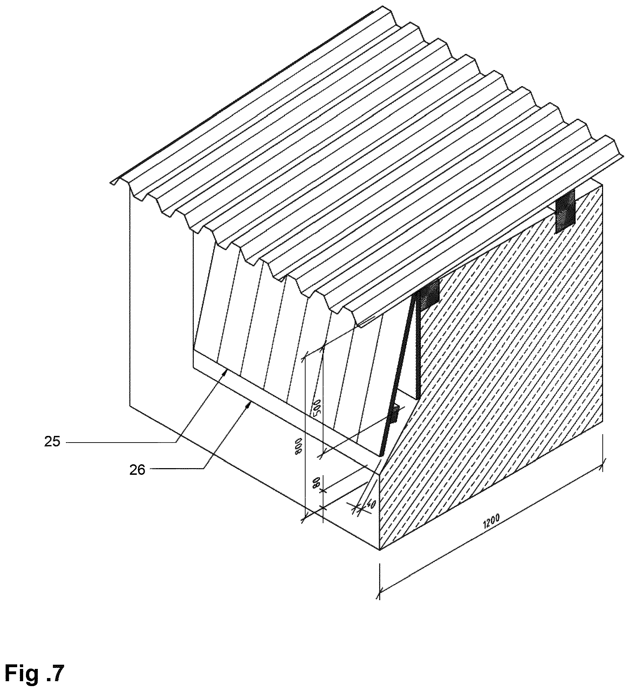

- Fig. 7: eine Nisthilfe für Fledermäuse in Schrägansicht, wobei an der der Lärmquelle abgewandten Seite sägeraue Lärchenbretter dergestalt schräg angeordnet sind, dass sie an ihrem unteren Ende einen Einflugspalt für die Fledermäuse frei lassen.

Die Fig. 1 zeigt in einer symbolischen und beispielhaften sowie perspektivischen Gesamtansicht eine erste Ausgestaltungsvariante einer erfindungsgemäßen Lärmschutzwand 100. So dargestellt, weist die Lärmschutzwand 100 ein linkes, vorderes Ende und ein rechtes, hinteres Ende auf oder wenn man so will, für einen Betrachter ein proximales Ende pE und ein distales dE. Grundsätzlich können die Enden der Lärmschutzwand 100 so wie das proximale Ende pE mit vertikal bündig abgeschnittenen Lehmelementen 5 ausgestaltet sein, oder aber auch wie das distale Ende dE stufenförmig.
Die Lärmschutzwand 100 weist jedenfalls eine Längsausrichtung La auf, sowie eine einer Lärmquelle Lq zugewandte Lärmschutzwand-Seite 1 und eine der Lärmquelle Lq abgewandte Lärmschutzwand-Seite 2. Die Lärmquelle Lq emittiert Schall S, der quasi von hinten auf die Lärmschutzwand 100 auftrifft.
Weiterhin steht die Lärmschutzwand 100 auf einem Fundament 3, das ein sogenanntes Streifenfundament aus Beton ist. Dieses Fundament 3 ragt vorzugsweise mit einem überstehenden Bereich 11 aus einem Boden oder Erdreich 4.
Zwischen vereinzelte Lehmelemente 5 aus Weller- oder Stampflehm, bei dieser Ausgestaltungsvariante bevorzugt in Form von vorgefertigten Lehmelementen in Form von Blöcken, sind Nisthilfen 6 angeordnet, in Form von "Fenstern" oder Aussparungen, die wiederum mit weichem, "unarmiertem" Lehm gefüllt sind.

In einem optionalen Befestigungsstreifen 7, der vorzugsweise im Wellerlehmverfahren auf die oberste Reihe von Lehmelementen aufgetragen ist, können vorzugsweise zwei vorzugsweise im Querschnitt trapezförmige Holzprofilleisten 12 eingearbeitet. An diesen Holzprofilleisten 12 kann eine Abdeckung 8 in Form eines Wellenprofils oder eines Wellbleches befestigt sein. Noch einfacher können diese direkt in der getrockneten Wellerlehmmasse sicher befestigt sein, beispielsweise mit nicht näher dargestellten langen Zimmermannsschrauben, Gewindestangen und Dichtungen.

Die Abdeckung 8 kann mit einem Gefälle geneigt montiert sein oder aber auch nicht, weist aber vorzugsweise einen Überstand 13 auf, der einerseits den Regenschutz 5 verbessert, aber auch vermutlich bewirkt, dass die Reflexion des Schalls S auf verbesserte Weise als bei einem bündig geraden Abschluss ohne Überstand 13 erfolgt.

In der Fig. 2 ist eine zweite 10 Ausgestaltungsvariante einer erfindungsgemäßen Lärmschutzwand 100a schematisch und beispielhaft dargestellt, die vorzugsweise mit Stampflehmelementen 5a, 5b realisiert ist und im Wesentlichen die bereits von der ersten Ausgestaltungsvariante der erfindungsgemäßen Lärmschutzwand 100 aus der Fig. 1 bekannten Merkmale aufweist. Diese werden somit ohne weitere Beschreibung nur mit den fortgeführten Indizes angezeigt. Unterschiedlich zur ersten Ausgestaltungsvariante ist jedoch, dass nebst Nisthilfen 6a in der bekannten Form als Lehmquader - hier allerdings optional bereits mit einer Nisthöhle 24 z.B. für Bienenfresser versehen - dieses Mal beispielhaft auch Nisthilfen 6b als in Reihen angeordnete gelochte Ziegelplatten oder gelochte Tonelemente ausgestaltet sind.

Wie bereits beschrieben, erfüllen die gelochten Ziegelplatten oder gelochten Tonelemente 6b einerseits die Funktion als Nisthilfen, andererseits aber auch als sogenannte Erosionsbremsen gegen die Verwitterung der annähernd senkrechten Oberflächen der Lärmschutzwand 100a. Die letztere Funktion kann optional auch durch eine Hanfkalk- oder Trasskalkmörtel-Schicht oder eine Heraklitschicht 17 erfüllt werden, die vorzugsweise an der der Lärmquelle Lq1 zugewandten Lärmschutzwand-Seite 1a angeordnet ist. Es kommen hierfür auch ungelochte Tonplatten in Betracht.

Des Weiteren ist eine Abdeckung 8a dieses Mal aus Solarpaneelen 9 gebildet, die vorzugsweise mittels Stützen 10 vorzugsweise geneigt montiert sind, zugunsten eines verbesserten Einfallswinkels der Sonnenstrahlen, aber auch, damit sie nicht verschmutzen und auch kein Schnee drauf liegen bleiben kann und so ihre Funktion gemindert oder aufgehoben wird. Weiterhin ist noch unterschiedlich zur ersten Ausgestaltungsvariante einer erfindungsgemäßen Lärmschutzwand 100 aus der Fig. 1, dass dieses Mal ein distales Ende dE1 der Lärmschutzwand 100a nicht mehr stufenförmig, sondern senkrecht bündig gestaltet ist.

Eine Schnittachse A-A verläuft durch die Stampflehmelemente 5a und 5b, sowie sowohl durch den Lehmquader 6a, als auch durch die gelochte Tonplatte 6b. Die entsprechende Schnittdarstellung wird noch in der Fig. 4 im Detail gezeigt werden.

Die Fig. 3 zeigt eine dritte Ausgestaltungsvariante einer erfindungsgemäßen Lärmschutzwand 100b, die zunächst einmal einen Mix aus Stampflehmelementen 5c-5e und Wellerlehmelementen 5f-5i darstellt. Wie gehabt, sind diese Lehmelemente 5c-5i auf einem Fundament 3b aufeinander aufgereiht, das in einem Erdreich bzw. auf einem Frostkoffer 4b angeordnet ist.
Des Weiteren ist ersichtlich, dass in demjenigen Teil der Lärmschutzwand 100b, der aus den Stampflehmelementen 5c-5e gebildet ist, Nisthilfen (und Erosionsbremsen) 6c in Form von gelochten Tonelementen in Reihen angeordnet sind. In dem obersten Stampflehmelement 5c ist in seine Oberseite eine weitere erfindungsgemäße Art von Nisthilfe 6i eingearbeitet worden, die ein Modul mit eingearbeitetem 30 Schilfrohr ist.

Man muss sich vorstellen, dass die Darstellung der Fig. 3 eine Schnittansicht einer der Lärmquelle abgewandten Lärmschutzwand-Seite 2b ist, entlang einer Schnittebene, die in wenigen Zentimetern Tiefe liegt. Dadurch jedoch verdeutlichen Schraffuren die verwendeten Materialien. So ist beispielsweise anhand der Schraffur aber auch erkennbar, dass das Wellerlehmelement 5f im Unterschied zu den Wellerlehmelementen 5g-5i mehr oder weniger frei aufgeschichtet wurde. Die Wellerlehmelemente 5g-5i hingegen können aus vorgefertigtem Wellerlehm gefertigt worden sein.

In dem Wellerlehmelement 5g ist als Nisthilfe 6d ein Lehmquader aus weichem, unverarbeitetem Lehm integriert. Eine weitere Art von Nisthilfen 6e-6h sind in ihrer einfachsten Form Löcher oder Bohrungen, die direkt in den Wellerlehm des Wellerlehmelements 5i angebracht wurden. Durch das Wellerlehmelement 5f, die Nisthilfe 6d in Form eines Lehmquaders in dem Wellerlehmelement 5g und durch die Löcher 6e und 6g ist eine Schnittachse B-B gelegt. Diese erzeugt eine entsprechende Schnittansicht, die noch in der Fig. 5 im Detail gezeigt werden wird.

Des Weiteren ist in dieser Fig. 3 dargestellt, wie eine Abdeckung 8b der Lärmschutzwand 100b realisiert ist, nämlich, indem z.B. eine Trennschicht 14, z.B. in Form einer Platte, die Oberseite der Lehmelemente 5c und 5f versiegelt und in einer Humusschicht 15 anspruchslose Bodendeckerpflanzen 16 gepflanzt sind, die weder Wasser noch einen periodischen Schnitt brauchen.

Die Fig. 4 zeigt, erneut in einer symbolischen und beispielhaften Detailzeichnung, die gleichzeitig die Schnittansicht entlang der Schnittachse A-A aus der Fig. 2 ist, eine symbolische selbstgegrabene Nisthöhle 24 eines Höhlenbrüters (Vogel). Die Tiefe des Lehmelements ist symbolisch dargestellt. Sie kann proportional tiefer reichen. Ebenso ist ersichtlich, dass sich das gelochte Tonelement 6b vorzugsweise nur im äußeren Bereich der Lärmschutzwand 100a befindet.
Die der Lärmquelle Lq1 bzw. dem Schall S1 zugewandte Lärmschutzwand-Seite 1a der Lärmschutzwand 100a ist frei von Nisthilfen, kann aber optional, wie andeutungsweise dargestellt, als auch auf dieser Lärmschutzwand-Seite 1a vorgesehene Erosionsbremsen in Form von Hanfkalk-oder Trasskalkmörtel 17 oder einer Heraklitschicht oder ungelochten Tonplatten aufweisen.

In der Fig. 5 ist in einer symbolischen und beispielhaften Detailzeichnung sowie Schnittansicht entlang der Schnittachse B-B aus der Fig. 3 einerseits gezeigt, dass sich die Nisthilfen 6d, 6e und 6g vorzugsweise in den Wellerlehmelementen 5g und 5i nur an der einer Lärmquelle Lq2 abgewandten Lärmschutzwand-Seite 2b befinden und nicht auch an einer der Lärmquelle Lq2 zugewandten Lärmschutzwand-Seite 1b der Lärmschutzwand 100b. Die Nisthilfen 6d, 6e und 6g sind vorzugsweise nicht durch die Lärmschutzwand 100b durchgehend ausgestaltet. Es ist bevorzugt, die der Lärmquelle Lq2 zugewandte Lärmschutzwand-Seite 1b für Insekten und Vögel feindlich zu halten und den bestmöglichen Schutz einem von der Lärmquelle Lq2 ausgehenden Schall S2 entgegenzustellen.
Andererseits wird in dieser Fig. 5 noch gezeigt, dass die Nisthilfe 6e leicht geneigt angeordnet sein kann, damit kein Wasser darin stehen kann.

In der Fig. 6 ist symbolisch und beispielhaft als Lärmquelle Lq3 eine Autobahn in Draufsicht dargestellt, an der sich eine Lärmschutzwand 100c in einer Längsausrichtung La3 erstreckt. Ein Ende der Lärmschutzwand 100c ist in Zickzack-Form ausgestaltet, indem Teilabschnitte 18a, 18b jeweils in einem Winkel W1, W2 von der Längsausrichtung La3 abweichen.

Fig. 7 zeigt eine weitere Ausführungsform eines Wandelements einer erfindungsgemässen Lärmschutzwand, wobei in das Lehmelement auf der der Lärmquelle abgewandten Seite eine Nisthilfe für Fledermäuse integriert ist. Diese besteht im Wesentlichen aus einer im Querschnitt dreiecksförmigen Anordnung von Holzbrettern 25, beispielsweise von noch sägerauen Lärchenbrettern, die auf eine solche Art und Weise im Lehmelement angeordnet sind, dass sie an ihrem unteren, eine Art gedachte Hypotenuse aufspannenden, Ende einen Einflugspalt für Fledermäuse frei lassen.

**BEZUGSZEICHENLISTE**

| | |
|---|---|
| 1, 1a-1c | Lärmschutzwand-Seite, der Lärmquelle zugewandt |
| 2, 2a-2c | Lärmschutzwand-Seite, der Lärmquelle abgewandt |
| 3, 3a-3d | Fundament, Streifenfundament |
| 4, 4a, 4b | Boden, Erdreich, Frostkoffer |
| 5, 5a-5k | Stampf- oder Wellerlehmelement, Wandelement |
| 6, 6a-6i | Nisthilfe, Bohrung, Loch, gelochtes Tonelement, weicher Lehm, Modul mit Schilfrohr |
| 7 | Befestig ungsstreifen |
| 8, 8a, 8b | Abdeckung |
| 9 | Solarpaneel |
| 10 | Stütze |
| 11 | überstehender Bereich von 3 |
| 12 | Holzprofilleiste |
| 13 | Überstand |
| 14 | Trennschicht |
| 15 | Humusschicht |
| 16 | Bodendeckerpflanze |
| 17 | Trasskalkmörtelleiste oder ungelochte Tonplatte |
| 18a-18c | Teilabschnitt von 100 |
| 19 | Armierung |
| 20 | Verschalung |
| 21 | Schiene |
| 22 | U-Profil |
| 23 | Schalungstafel |
| 24 | Nisthöhle |
| 25 | sägeraue Lärchenbretter |
| 26 | Einflugspalt für Fledermäuse |
| 100, 100a-100e | Lärmschutzwand |
| dE, dE1 | distales Ende von 100 |
| La, La1-La3 | Längsausrichtung von 100 |
| Lq, Lq1-Lq3 | Lärmquelle |
| pE, pE1 | proximales Ende von 100 |
| S, S1, S2 | Schall |
| W1, W2 | Winkel |

## Patentansprüche

1. Verfahren zur Herstellung von Lehmelementen aus Wellerlehm, **dadurch gekennzeichnet, dass** Lehm mit einer Mindestbindigkeit von 50 g/cm² mit organischem Fasermaterial einer durchschnittlichen Länge von 15 - 50 cm vermischt, die resultierende Lehmmischung auf einen Feuchtegehalt von 5 - 15 Gew.%, bezogen auf die Trockenmasse der Lehmmischung, eingestellt und die solcherart hergestellte Lehmmischung mit einem Druck von mindestens 1.4 N/mm² , vorzugsweise mindestens 2 N/mm² und gegebenenfalls mindestens 3.0 N/mm² maschinell zu Lehmelementen einer gewünschten Form verdichtet wird.

2. Verfahren nach Anspruch 1, **dadurch gekennzeichnet, dass** die Verdichtung in einer Presskammer durch Pressen oder in einer Wandschalung durch Stampfen bewerkstelligt wird.

3. Verfahren nach Anspruch 1 oder 2, **dadurch gekennzeichnet, dass** als organisches Fasermaterial Pflanzenfasern, vorzugsweise aus der Gruppe bestehend aus Getreidestroh, Heu, Heidekraut, Wolle, Flachs, Hanf, und Piniennadeln, eingesetzt wird.

4. Verfahren nach einem der Ansprüche 1 bis 3, **dadurch gekennzeichnet, dass** dabei Lehmelemente mit einer Druckfestigkeit von mindestens 1.5 N/mm², insbesondere von mindestens 3 und gegebenenfalls von mindestens 5 N/mm², hergestellt werden.

5. Lehmelement aus verdichtetem Wellerlehm, mit einem Anteil von organischem Fasermaterial einer durchschnittlichen Länge von 15 - 50 cm, mit einem Feuchtegehalt von 5 - 15 Gew.% und einer Druckfestigkeit von mindestens 1.5 N/mm², vorzugsweise von 1.5 - 5 N/mm², erzielt durch maschinelles Verdichten des Wellerlehms unter einem Druck von mindestens 1.4 N/mm², insbesondere von 1.4 - 3.0 N/mm².

6. Lehmelement nach Anspruch 5, mit einem Anteil von 1 - 50 Gew%, bezogen auf die Trockenmasse des Lehmelements, an organischem Fasermaterial.

7. Lehmelement nach Anspruch 5 oder 6, wobei das organische Fasermaterial natürliche Pflanzenfasern umfasst, vorzugsweise aus der Gruppe Getreidestroh, Heu, Heidekraut, Wolle, Flachs, Hanf, und Piniennadeln.

8. Lehmelement nach einem der Ansprüche 5 bis 7, als Bestandteil senkrechter Wandstrukturen, insbesondere als Bestandteil von Außenwänden im Hochbau, als Bestandteil aller Arten von leichten und schweren Zwischenwänden, als Bestandteil von Vorsatzschalen, von Innendämmungen und/oder Holzbalken-Deckenfüllungen, sowie als Bestandteil von Lärmschutzwänden.

9. Verwendung eines Lehmelements aus einem der Ansprüche 5 bis 7, zur Herstellung senkrechter Wandstrukturen, insbesondere zur Herstellung von Außenwänden im Hochbau, zur Herstellung aller Arten von leichten und schweren Zwischenwänden, zur Herstellung von Vorsatzschalen, Innendämmungen und Holzbalken-Deckenfüllungen, sowie zur Errichtung von Lärmschutzwänden.

10. Lärmschutzwand (100, 100a-100e), mit einer der Lärmquelle (Lq, Lq1-Lq3) zugewandten Lärmschutzwand-Seite (1, 1a-1c) und mit einer der Lärmquelle (Lq, Lq1-Lq3) abgewandten Lärmschutzwand-Seite (2, 2a-2c)mit auf einem Fundament (3, 3a-3d) angeordneten Wandelementen (5, 5a-5k), **dadurch gekennzeichnet, dass**
die Wandelemente (5, 5a-5k) Lehmelemente (5, 5a-5k), vorzugsweise aus mineralischem Stampflehm oder verdichtetem, faserarmiertem Wellerlehm, sind und dass an der der Lärmquelle (Lq, Lq1-Lq3) abgewandten Lärmschutzwand-Seite (2, 2a-2c) Nisthilfen (6, 6a-6i) für Insekten, Vögel und/oder Fledermäuse in oder zwischen den Lehmelementen (5, 5a-5k) der Lärmschutzwand (100, 15 100a-100e) angeordnet sind.

11. Lärmschutzwand nach Anspruch 10, **dadurch gekennzeichnet, dass** die Nisthilfen (6e-6h) in Form von Löchern oder Bohrungen ausgeführt sind und/oder in Form von Lehmelementen (6, 6a, 6d) aus weichem, unbehandeltem, nicht-armiertem Lehm bereit gestellt werden, die zwischen oder in den Stampf- oder Wellerlehmelementen (5, 5a, 5g) angeordnet sind.

12. Lärmschutzwand nach einem der Ansprüche 10 oder 11, **dadurch gekennzeichnet, dass** die Nisthilfen in Form gelochter Tonelemente, vorzugsweise aus gebranntem Ton oder tonähnlichen Materialien, insbesondere aus bei einer Temperatur von unter 900 °C gebrannten, gelochten Ziegelplatten, ausgeführt sind, die gleichzeitig als Erosionsbremsen gegen die Verwitterung der Oberflächen der Lehmelemente fungieren.

13. Lärmschutzwand nach einem der Ansprüche 10 bis 12, **dadurch gekennzeichnet, dass** Erosionsbremsen in Form von Schilfrohr und/oder Bambusstängeln in den Lehmelementen angeordnet und/oder in Form mindestens einer, vorzugsweise annähernd waagerecht durch die Lärmschutzwand verlaufenden, Hanfkalkmörtel-Schicht oder Heraklitschicht ausgeführt sind.

14. Lärmschutzwand nach einem der Ansprüche 10 bis 13, **dadurch gekennzeichnet, dass** sie eine Abdeckung (8a) aufweist, welche entweder Solarpaneele (9) oder eine Trennschicht (14), eine Humusschicht (15) und eine Bepflanzung (16) umfasst.

15. Lärmschutzwand nach einem der Ansprüche 10 bis 14, **dadurch gekennzeichnet, dass** sie Teilabschnitte (18a, 18b) aufweist, die in einem von der Längsausrichtung (La3) abweichenden Winkel (W1, W2) angeordnet sind.
